**Europäisches Patentamt**

(19) **European Patent Office**

**Office européen des brevets**

(11) Veröffentlichungsnummer: **0 048 925**
**B1**

(12) **EUROPÄISCHE PATENTSCHRIFT**

(45) Veröffentlichungstag der Patentschrift:
14.03.84

(51) Int. Cl.³: **H 04 M 9/02**

(21) Anmeldenummer: **81107505.0**

(22) Anmeldetag: **21.09.81**

(54) Schaltungsanordnung für kleine Fernsprechnebenstellenanlagen mit wechselseitiger Übertragung von binären Digitalsignalen zwischen einer zentralen Einrichtung und mit ihr verbundenen Fernsprechapparaten.

(30) Priorität: **25.09.80 DE 3036182**

(43) Veröffentlichungstag der Anmeldung:
**07.04.82 Patentblatt 82/14**

(45) Bekanntmachung des Hinweises auf die Patenterteilung:
**14.03.84 Patentblatt 84/11**

(84) Benannte Vertragsstaaten:
**AT BE IT NL**

(56) Entgegenhaltungen:
**GB - A - 1 401 369**
**US - A - 3 215 779**

**INTERNATIONAL CONFERENCE ON PRIVATE ELECTRONIC SWITCHED SYSTEMS, 10th-12th April 1978, Seiten 64-69 London, G.B. J. SIDWELL: "E1 - A small stored program controlled PABX"**
**ELECTRICAL COMMUNICATION, Band 52, Nr. 4, 1977, Seiten 293-298 London, G.B. F.J. HOWETT et al.: "Novakey data controlled key system"**

(73) Patentinhaber: **SIEMENS AKTIENGESELLSCHAFT, Berlin und München Wittelsbacherplatz 2, D-8000 München 2 (DE)**

(72) Erfinder: **Blossfeldt, Dieter, Dipl.-Ing., Hirsch-Gereuth-Strasse 31, D-8000 München 70 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Schaltungsanordnung für kleine Fernsprechnebenstellenanlagen mit wechselseitiger Übertragung von binären Digitalsignalen zwischen einer zentralen Einrichtung und mit ihr verbundenen Fernsprechapparaten**

Die Erfindung betrifft eine Schaltungsanordnung für kleine Fernsprechnebenstellenanlagen mit wechselseitiger Übertragung von binären Digitalsignalen zwischen einer zentralen Einrichtung und Fernsprechapparaten, die mit ihr über kurze, aus einer zweiadrigen Signalleitung und einer zweiadrigen Sprechleitung bestehenden Verbindungsleitung sternförmig verbunden sind, wobei vorzugsweise die Informationen der einen Richtung bitweise mit denen der anderen Richtung innerhalb festgelegter Datenblöcke verschachtelt sind und die Übertragung durch Binärzeichen mit durch ihre Amplitude oder ihr Vorzeichen unterschiedenen und in der einen, vorzugsweise von der zentralen Einrichtung zu den Fernsprechapparaten weisenden Richtung auf die Signalleitungsspannungen und in der dazu entgegengesetzten Richtung auf die Signalleitungsströme bezogenen Binärwerten erfolgt und der Übertragung von der zentralen Einrichtung zu den Fernsprechapparaten eine wesentlich höhere Informationsdichte als in der Gegenrichtung zugrunde liegt.

Eine solche Schaltungsanordnung ist bekannt (International Conference on Private Electronic Switching Systems, 10.—12. April 1978, Seiten 64 bis 69, London).

Es wird von kleinen Nebenstellenanlagen ausgegangen, bei denen zwischen den einzelnen Sprechapparaten und einer ihnen gemeinsamen Steuereinrichtung eine wechselseitig gerichtete Signalisierung stattfindet. Diese Signalisierung erfolgt über ein Signaladernpaar, das neben dem Sprechadernpaar die jeweilige Anschlußleitung bildet. Zu den Sprechapparaten werden in erster Linie Einstellinformationen für an ihnen angebrachte optische Anzeigeelemente, die beispielsweise durch Leuchtdioden und/oder durch eine Display-Anzeige realisiert sein können, übertragen. Durch die Display-Anzeige kann beispielsweise der jeweilige Teilnehmer über die eingewählte Rufnummer oder über aufgelaufene Gebühren informiert werden. Durch den Leuchtzustand der einzelnen Leuchtdioden kann der Belegtzustand der Intern- bzw. der vorhandenen Externleitungen angezeigt werden. Die Informationen für sämtliche, an einem Sprechapparat vorhandenen Anzeigeelemente können in einem Datenblock zusammengefaßt und als binäre Digitalsignale übertragen werden. Dies kann durch Digitalsignale erfolgen, deren Binärwerte durch unterschiedliche Amplituden der Signalleitungsspannung definiert sind. Das O-Bit kann beispielsweise dem Signalspannungsruhewert entsprechen, während das 1-Bit ein aktives Signal in Form einer vorzunehmenden Spannungsabsenkung darstellen kann. Die Steuerung der zugeordneten Spannungszustände erfolgt durch eine Sendeeinheit, die ihrerseits von einer in der zentralen Einrichtung enthaltenen Steuereinheit, die beispielsweise einen Prozessor darstellt, gesteuert wird.

Über die Signalleitung werden auch Informationen übertragen, die von den Sprechapparaten ausgehen und insbesondere die Betätigung von einzelnen Tasten signalisieren. Neben den Wähltasten können weitere Tasten vorhanden sein, die bestimmte Bedienungsprozeduren ermöglichen bzw. durch deren Betätigung die Art der beabsichtigten Verbindung signalisiert werden kann. Es kann also unterschieden werden, ob eine interne Verbindung zu einem anderen Sprechapparat der Nebenstellenanlage oder eine externe Verbindung zu einem Sprechapparat des öffentlichen Netzes bzw. zu einem Sprechapparat einer anderen Wählnebenstellenanlage hergestellt werden soll.

Die Binärwerte der von den Fernsprechapparaten ausgehenden Informationen können durch unterschiedliche Signalstromwerte charakterisiert sein. Bei der wechselseitigen Signalisierung können die Informationen für jeweils eine Richtung in einem Datenblock zusammengefaßt sein. Die Datenblöcke werden ständig und nicht nur bei einer Änderung der in ihnen enthaltenen Informationen übertragen. Es kann auch eine bitweise Verschachtelung der den beiden Richtungen zuzuordnenden Informationen innerhalb eines gebildeten Datenblockes vorgenommen werden.

Die wechselseitige Signalisierung erfordert eine zeitgerechte Abstimmung in den Sendefunktionen. Hierzu muß der Takt, der im Fernsprechapparat der Aussendung der Informationsbits zugrundegelegt wird, mit dem Takt, der in der zentralen Einrichtung die Aussendung der Informationsbits bestimmt, zeitlich übereinstimmen. Da voraussetzungsgemäß bei der Signalisierung eine Veränderung der Spannung bzw. der Ströme auf der Signalleitung vorgenommen wird, muß sichergestellt werden, daß durch die damit erzeugten Sendeimpulse die zulässige Geräuschspannung nicht überschritten wird. Dies muß auch dann gelten, wenn die vieradrigen Anschlußleitungen eine sehr geringe Leitungslänge aufweisen.

Es ist die Aufgabe der Erfindung, bei einer Anordnung der eingangs genannten Art die hinsichtlich der Synchronisation und der Störbefreiung einzuhaltenden Forderungen durch äußerst einfache Mittel zu erfüllen.

Dies wird dadurch erreicht, daß durch die Sendeeinheit eine Verformung der durch eine Amplitudenänderung erzeugten und einem bestimmten Binärwert zugeordneten Impulse vermittels blindwiderstandbehafteter Elemente bewirkt wird, daß am Ausgang der an die Signalleitung angeschalteten Sendeeinheit eine Empfangsschaltung angeordnet ist, die grundsätzlich derjenigen Empfangsschaltung entspricht, die am anderen Ende der Signalleitung für die Registrierung eben dieser Impulse vorhanden ist, daß eine bestimmte Flanke eines jeden, in den genannten Empfangsschaltungen registrierten Impulses zur Synchronisation der jeweils für die Takterzeugung maßgebenden Einheit verwendet wird.

Durch die erfindungsgemäß vorgenommene Verformung der die Binärzeichen bildenden Impulse, die im wesentlichen in einer Abrundung der Impulsecken besteht, wird die aufgrund der Signalisierung in den Sprechadern entstehende Geräuschspannung gegenüber der Verwendung von Rechteckimpulsen herabgesetzt. Dadurch wird auch bei sehr kurzen Teilnehmeranschlußleitungen die zulässige Geräuschspannung nicht überschritten. Bei den meisten Anwendungsfällen für die eingangs erläuterte wechselseitige Signalisierung wird eine niedrige Sendefrequenz, beispielsweise 250 Hz, verwendet. Bei einer derartigen Frequenz liegen die Oberwellen in einem Bereich, der durch das Gehör bevorzugt wahrgenommen wird. Durch die Verformung und die damit verbundene Dämpfung der Oberwellen kann der Sendepegel erhöht werden, ohne daß dadurch gleichzeitig die Geräuschspannung angehoben wird. Dadurch ergibt sich eine Verminderung der Störempfindlichkeit für die vorgenommene Übertragung.

Erfindungsgemäß wird neben der eigentlichen Empfangsschaltung für die ausgesendeten Impulse auch sendeseitig eine damit übereinstimmende Empfangsschaltung angeordnet. Da die jeweiligen durch sie registrierten Impulse als Synchronisierimpulse verwendet werden, kann sich eine Phasenverschiebung zwischen dem Ansteuersignal für die jeweilige Sendeeinheit und dem tatsächlich ausgesendeten Impuls, die bei der Verformung vermittels der blindwiderstandbehafteten Elemente auftritt, nicht mehr auswirken. Da, bezogen auf eine vorgegebene Richtung mit jedem dieser Richtung zuzuordnenden Impuls innerhalb eines Datenblocks synchronisiert wird, kann der erforderliche Takt jeweils von einem Oszillator abgeleitet werden, der bei einfachstem Aufbau auch eine geringe Frequenzkonstanz aufweisen kann.

Für die Steuerung von Anzeigeelementen an den Fernsprechapparaturen ist eine größere Informationsdichte zugrunde zu legen als in der dazu entgegengesetzten Richtung. Vom Fernsprechapparat werden aktive Informationen immer nur bei einer vorgenommenen Tastenbetätigung gesendet. Zu den übrigen Zeitpunkten werden dann beispielsweise dem Leitungsruhewert entsprechende O-Bits gesendet.

Gemäß einer Weiterbildung der Erfindung wird die genannte Verformung für diejenigen Impulse vorgenommen, die durch die Amplitudenänderung der Signalspannung erzeugt werden und der Informationsübermittlung von der zentralen Einrichtung zu den jeweiligen Sprechapparaten dienen.

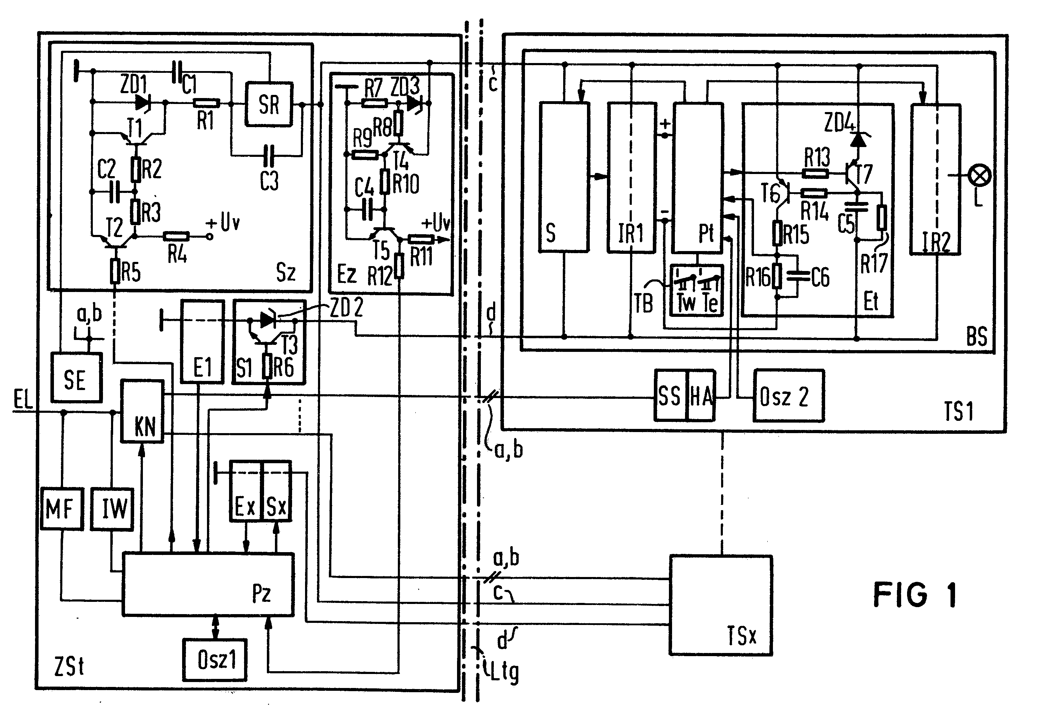

Die Erfindung wird durch die in den Zeichnungen dargestellten Ausführungsbeispielen näher erläutert. Das Blockschaltbild nach Fig. 1 zeigt die Grundstruktur einer kleinen Nebenstellenanlage, bei der zwischen der zentralen Einrichtung und den einzelnen Fernsprechapparaten eine wechselseitige Signalisierung stattfindet. Es sind lediglich die für das Verständnis der Erfindung erforderlichen Einzelheiten dargestellt.

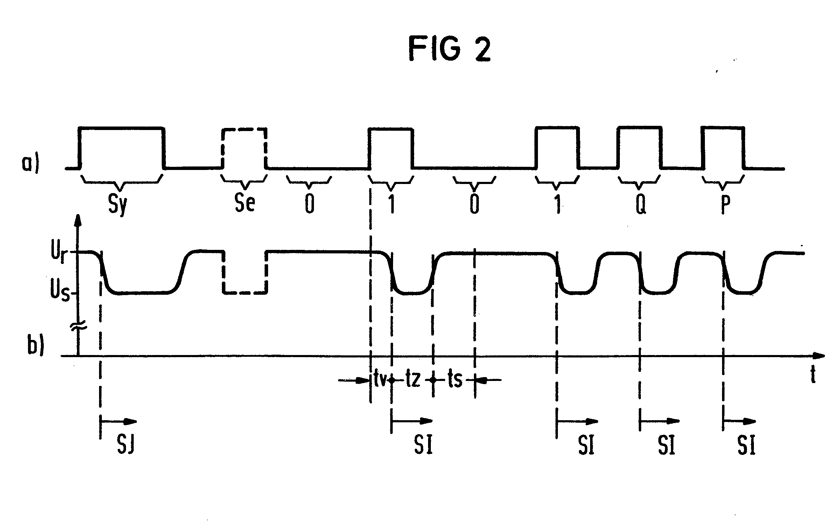

Die Diagramme der Fig. 2 dienen zur Veranschaulichung der Sendefunktionen.

Bei der in der Fig. 1 dargestellten kleinen Nebenstellenanlage sind die einzelnen Sprechapparate TS1 bis TSx sternförmig über eine jeweils vieradrige Anschlußleitung Ltg mit einer ihnen gemeinsamen Einrichtung ZSt verbunden. Jede Teilnehmeranschlußleitung besteht aus dem Sprechadernpaar a, b und dem Signalisierungsadernpaar c, d. Über die a-, b-Adern werden die Sprachinformationen und der Rufstrom übertragen. Über die c-, d-Adern wird eine wechselseitige Signalisierung zwischen den einzelnen Sprechapparaten und der zentralen Einrichtung vorgenommen und gleichzeitig diejenigen Einheiten eines jeden Sprechapparates, die mit der Signalisierung in Zusammenhang stehen und die für den Sprechapparat TS1 durch die Baugruppe BS zusammengefaßt sind, mit der notwendigen Speisespannung versorgt. Diese Speisespannung wird von der Einheit SE der zentralen Einrichtung geliefert. Diese Einheit kann einen von der Netzspannung gespeisten Stromwandler darstellen, der in gleicher Weise auch die an die Sprechadern zur Mikrofonspeisung anzuschaltende Versorgungsspannung abgeben kann. Dies ist durch das ein Vielfach kennzeichnendes Schaltsymbol an einem Ausgang der Einheit SE angedeutet.

An die zu jedem Sprechapparat führenden Sprechadern a, b ist die Sprechschaltung SS angeschlossen, die neben der in Verbindung mit dem Handapparat HA vorzunehmenden Verarbeitung der Sprachinformationen die Leitungsabschlußschaltung beinhaltet. Zwischen den einzelnen Sprechapparaten sind interne Verbindungen herstellbar und es besteht die Möglichkeit, sich auf eine externe Leitung EL, die eine Leitung zum öffentlichen Fernsprechnetz oder zu einer anderen Nebenstellenanlage sein kann, aufzuschalten. Es können beispielsweise für insgesamt 16 Sprechapparate, die in Verbindung mit der zentralen Einrichtung die kleine Nebenstellenanlage bilden, vier externe Leitungen zur Verfügung stehen. Die Art der gewünschten Verbindung kann beispielsweise durch die Betätigung der hierfür an jedem Fernsprechapparat vorgesehen Tasten signalisiert werden. Für den Sprechapparat TS1 ist durch den Tastenblock TB die Möglichkeit angedeutet, durch Tastenbetätigung die Aussendung bestimmter Informationen zu veranlassen. Die Taste Tw soll symbolisch die Tasten einer normalen Wahltastatur andeuten, während die Taste Te für eine Reihe von Tasten steht, durch die bestimmte Bedienungsprozeduren eingeleitet werden können. Wird beispielsweise durch Betätigung einer hierfür vorgesehenen Taste, die eine der Tasten Te sein kann, signalisiert, daß der Aufbau einer externen Verbindung beabsichtigt ist, so führt die nachfolgende Betätigung der Wahltasten zu einer Ausgabe der zugeordneten Wahlinformation. In Systemen

mit normaler Wahlimpulsgabe durch Schleifenunterbrechung kann dies, gesteuert durch die Steuereinheit Pz in der zentralen Einrichtung durch die Einheit IW erfolgen. Mittels der Einheit MF besteht die Möglichkeit, die notwendigen Wahlinformationen in bekannter Weise in einem Mehrfrequenz-Code abzugeben. Die Steuereinheit PZ liefert auch die Einstellbefehle für die Koppelanordnung KN, durch die dann über die entsprechende Betätigung ihrer Koppelpunkte die Verbindungsdurchschaltung ermöglicht wird. Wird eine interne Verbindung zu einem anderen Sprechapparat der Nebenstellenanlage gewünscht, so gibt die Steuereinheit entsprechende Einstellbefehle für die Koppelanordnung ab.

Die von einem Sprechapparat übermittelten Informationen können vor der Verarbeitung durch die Steuereinheit PZ in einem nicht weiter dargestellten Speicher zwischengespeichert werden. Die Übermittlung dieser Informationen kann durch binäre Digitalsignale erfolgen, deren Binärwerte durch einen vorgegebenen Stromruhewert bzw. durch eine Stromabsenkung des Signalleitungsstromes charakterisiert sind. Diese Stromabsenkung kann in jedem Fernsprechapparat durch die Sendeeinrichtung S bewirkt werden, die ihrerseits von einer Steuereinheit Pt, die die von den Tasten ausgehenden Anreize zunächst aufnimmt und verarbeitet, gesteuert wird. Durch diese Steuereinheit wird weiterhin das Abheben des Handapparates registriert und als entsprechende Information der zentralen Einrichtung mitgeteilt.

Die Sendeeinrichtung S kann im wesentlichen aus einem elektronischen Schalter bestehen, durch den eine erste von insgesamt zwei Stromreglereinheiten, nämlich die Stromreglereinheit IR1, die zur Versorgung der Steuereinheit Pt dient, wirkungslos geschaltet wird. Während dieser Zeit wird die Versorgung dieser Steuereinheit durch ein Speicherelement aufrechterhalten, das in der Reglereinheit enthalten ist. In der Baugruppe BS eines jeden Sprechapparates ist noch eine zweite Reglerschaltung IR2 vorhanden, durch die optische Anzeigeelemente, die symbolisch durch das Anzeigeelement L dargestellt sind, versorgt werden. Diese Anzeigeelemente können Leuchtdioden darstellen, durch die beispielsweise der Belegtzustand der einzelnen Externleitungen oder der Belegtzustand der Internleitungen angezeigt wird. Diese Leuchtdioden können zur Verringerung ihrer Stromaufnahme in Reihe geschaltet sein. Diejenigen Leuchtdioden, die ausgeschaltet sein sollen, können durch einen elektronischen Schalter wirksam überbrückt sein. Diese Schalter werden von der Steuereinheit Pt, die ihrerseits entsprechende Einstellinformationen von der zentralen Einrichtung über die Empfangsschaltung Et erhält, gesteuert. Durch die Reglerschaltung IR2 wird ein konstanter Strom aufgenommen. Der über die c-, d-Adern der Signalleitung fließende Strom hat somit einen Wert, der im wesentlichen der Summe der von den beiden Reglereinheiten gezogenen Ströme entspricht. Zu diesem Stromwert addiert sich noch der demgegenüber verschwindend geringe Strom, der durch die Sendeeinrichtung S und durch die Empfangsschaltung Et aufgenommen wird. Erfolgt beispielsweise die Abschaltung der Reglereinheit IR1 durch die Sendeeinrichtung S, so wird dadurch der auf den Signaladern fließende Strom um den Wert des ansonsten von diesem Regler aufgenommenen Stromes abgesenkt. Es wird somit eine Modulation des auf der Signalleitung fließenden Stromes durchgeführt. Die Binärwerte der zu übertragenden digitalen Informationen werden also durch die Stromabsenkung, die einem 1-Bit entsprechen kann, und beispielsweise durch den Ruhestromwert der Signalleitung, der dann dem O-Bit entspricht, gebildet. Diese vom Fernsprechapparat ausgehenden Informationen können für sich in einem Datenblock zusammengefaßt sein, wobei dann abwechselnd ein Datenblock zu der zentralen Einrichtung und von dieser zu dem Fernsprechapparat übertragen wird. Die von einem Fernsprechapparat abzugebenden Informationen können auch innerhalb eines zu bildenden Datenblockes bitweise mit den von der zentralen Einrichtung ausgesendeten Informationen verschachtelt werden.

Die von den Sprechapparaten abgegebenen digitalen Informationen werden durch eine, jeweils mit einer Ader einer jeden Signalleitung gekoppelten Empfangsschaltung E1 bis Ex registriert und der Steuereinheit Pz in der zentralen Einrichtung übergeben. Es ist also für jeden Sprechapparat eine eigene Empfangsschaltung vorhanden. Diese Empfangsschaltung kann im wesentlichen aus einem in der d-Ader liegenden Widerstand und einem den Spannungsabfall an diesem Widerstand auswertenden Transistor oder Operationsverstärker bestehen. Aufgrund der empfangenen Informationen leitet dann die Steuereinheit die daran anzuknüpfenden Folgefunktionen ein.

Die von der zentralen Einrichtung ZSt an die einzelnen Sprechapparate ausgesendeten Informationen, die hauptsächlich Einstellinformationen für optische Anzeigeelemente betreffen, werden als binäre Digitalsignale über die jeweilige Signalleitung übertragen. Die Binärwerte der jeweils in einem Datenblock zusammenzufassenden gesamten Information für einen Sprechapparat werden durch einen Spannungsruhewert und durch die Spannungsabsenkung gebildet.

In vielen Fällen müssen zu den einzelnen Sprechapparaten dieselben Informationen übertragen werden. Dies kann durch eine gemeinsame, von der Steuereinheit Pz gesteuerten Sendeschaltung Sz bewirkt werden, die ausgangsseitig im Vielfach mit jeweils einer Ader der einzelnen Signalleitungen verbunden ist. Im Ausführungsbeispiel ist die Sendeschaltung mit jeder c-Ader gekoppelt. Die Sendeschaltung Sz enthält einen Spannungsregler SR, über den eine vorgegebene und von der Einheit SE gelieferte Gleichspannung an die Signalleitung angelegt wird. Diese dient als Versorgungsspannung für die mit dieser Leitung in den einzelnen Fernsprechapparaten gekoppelten Einheiten.

Der beispielsweise einem 1-Bit entsprechende aktive Binärwert soll, wie bereits erwähnt, durch eine bestimmte Absenkung der Signaladernspannung gebildet werden. Das der auszusendenden Information innerhalb eines Datenblockes entsprechende Bitmuster wird durch einen damit übereinstimmenden Sendetakt von der Steuereinheit Pz an die Sendeschaltung Sz abgegeben. Der Sendetakt wird über den Basiswiderstand R5 an die Basis des als Pegelumsetzer vorhandenen Transistors T2 angelegt. Bei jedem aktiven Sendetaktimpuls für ein beispielhaft in der Zeile a der Fig. 2 dargestelltes Bitmuster wird der Transistor T2 durchgesteuert. Dadurch wird über den Arbeitswiderstand R4 und die Widerstände R2 und R3 aufsteuerndes Potential an die Basis des Transistors T1 angelegt. Mit dem Durchschalten dieses Transistors wird die Zenerdiode ZD1 überbrückt. Dadurch wird das Potential am sogenannten Massenanschluß der integrierten Reglerschaltung SR um den Wert der Zenerspannung abgesenkt. Die Ausgangsspannung der Reglerschaltung folgt dieser Absenkung. Bei jedem Sendetaktimpuls, der im Rahmen des durch die Steuereinheit vorgegebenen Bitmusters angelegt wird, sinkt somit die Spannung an den Signaladern um einen bestimmten Wert, beispielsweise um 3 V, ab. Da an der zentralen Einrichtung einzelne Fernsprechapparate unmittelbar oder über nur sehr kurze Teilnehmeranschlußleitungen angekoppelt sein können, muß sichergestellt sein, daß bei der Aussendung der Impulse sich keine unzulässig hohe Geräuschspannung auf der Sprechleitung einstellt. Da für die Signalisierung eine niedrige Sendefrequenz von beispielsweise 250 Hz verwendet werden kann, liegen zudem die Oberwellen bei einer rechteckförmigen Impulsgabe in einem Bereich, in welchem das Ohr sehr empfindlich ist. In der Sendeschaltung sind RC-Schaltglieder vorhanden, durch die eine Verformung der ausgesendeten Impulse erzielt wird. Diese besteht im wesentlichen darin, daß die Ecken der auszusendenden Impulse abgerundet sind. Dies wird durch die jeweils aus dem Widerstand R1 und dem Kondensator C1 sowie aus den Widerständen R2, R3 und dem Kondensator C2 gebildeten Zeitgliedern erzielt. Der am Spannungsregler angeschaltete Kondensator C3 dient zur Unterdrückung der Schwingneigung des Reglers.

Sollen die einzelnen Fernsprechapparate unterschiedliche Informationen erhalten, so kann dies durch eine einfache Selektionsschaltung S1 bis Sx, die demnach pro Fernsprechapparat vorhanden ist, erfolgen. Durch diese zusätzliche Sendeschaltung ist es dann möglich, für einen bestimmten Fernsprechapparat in dem durch die gemeinsame Sendeschaltung Sz ausgesendeten Datenblock ein zusätzliches Informationsbit an einer fest vorgegebenen Stelle einzufügen. Dies kann durch eine Spannungsabsenkung auf der d-Ader erfolgen, die zu dem Fernsprechapparat führt, der die Information erhalten soll. Dadurch wird die betreffende Gesamtinformation im jeweiligen Datenblock nur von der in diesem zugeordneten Fernsprechapparat enthaltenen Empfangsschaltung ausgewertet, während sie von den die empfangenen Impulse auswertenden Steuereinheiten der übrigen Fernsprechapparate ignoriert wird. Als Selektionsschaltung, die jeweils mit einer d-Ader gekoppelt ist, kann, wie dies für die Schaltung S1 dargestellt ist, eine in dieser Ader liegende Zenderdiode ZD2 dienen, die durch den über den Widerstand R6 von der Steuereinheit anzusteuernden Transistor T3 überbrückbar ist. Wird dieser Transistor durch einen von der Steuereinheit gelieferten Ansteuerimpuls durchgeschaltet, so wird die Spannung an der Signalleitung um den Wert der Zenerspannung abgesenkt. Auf diese Weise kann also für einen bestimmten Fernsprechapparat ein 1-Bit in den Datenblock eingefügt werden, während an dieser Stelle für alle übrigen Fernsprechapparate ein O-Bit vorhanden ist. Dies liefert dann für diese Fernsprechapparate die Information, daß der empfangene Datenblock nicht auszuwerten ist. Soll eine Information von allen Fernsprechapparaten ausgewertet werden, so kann die gemeinsame Sendeschaltung Sz in der zentralen Einrichtung das vorgesehene Selektionsbit bereits im Datenblock mitaussenden. Die Auswahl eines bestimmten Fernsprechapparates durch Einfügen eines durch Spannungsabsenkung definierten Selektionsbit ist möglich, da im Fernsprechapparat für die Adern der Signalleitung kein Bezugspotential festgelegt ist.

Im Fernsprechapparat wertet die an der Signalleitung liegende Empfangsschaltung Et die an den Adern der jeweiligen Signalleitung auftretenden Spannungsänderungen aus. Dadurch sind die durch eine Spannungsabsenkung definierten Informationsbits feststellbar. Als Empfänger für die ankommenden Informationsbits dient in einfachster Weise der Transistor T6. Dessen Emitter ist mit der c-Ader verbunden, während seine Basis über den Basiswiderstand R14 mit der Plusseite des mit der d-Ader gekoppeltem Kondensators C5 verbunden ist. Dieser Kondensator ist über die Zenerdiode ZD4 bei durchgesteuertem Transistor T7 auf eine Spannung aufgeladen, welche um die Zenerspannung niedriger ist als die Spannung an der c-Ader. Wird durch die Sendeschaltung in der zentralen Einrichtung eine Spannungsabsenkung vorgenommen, so sinkt beispielsweise die Spannung um 3 V ab, während die Spannung am Kondensator C5 das Basispotential des Transistors T6 annähernd konstant hält. Wird die Zenerspannung der Zenderdiode ZD4 so gewählt, daß sie zusammen mit der Basis-Emitter-Spannung des Transistors T6 kleiner oder höchstens gleich der vorgenommenen Spannungsabsenkung ist, so wird der Transistor gesperrt. Mit dem Ende einer jeden vorgenommenen Spannungsabsenkung wird der Transistor T6 wieder aufgesteuert. Jede Spannungsabsenkung wird also als entsprechender Steuerimpuls an die Steuereinheit Pt abgegeben. Hierzu wird der am Kollektorwiderstand R15 auftretende Spannungsabfall benutzt. Im Kollektorkreis liegt weiterhin das aus dem Widerstand R16 und dem Kondensator C6 bestehende Verzögerungsglied. Dieses Verzögerungsglied dient dazu, daß kurzzeitige, durch Störbeeinflussungen entstehende Absenkungen der Signalspannung nicht ausgewertet werden.

Wie bereits erläutert wird eine Verformung der von der Sendeeinheit Sz der zentralen Einrichtung ZST abgegebenen aktiven Signale, die durch Spannungsabsenkung gebildet werden, vorgenommen. Dies erfolgt durch blindwiderstandbehaftete Bauelemente und dient, insbesondere im Hinblick auf kurze Abschlußleitungen zur Verminderung der Geräuschspannung auf den Sprechleitungen. Im Ausführungsbeispiel erfolgt eine Abrundung der Ecken des abgegebenen Impulses durch RC-Glieder. Sie werden aus dem Widerstand R1 und dem Kondensator C1 bzw. aus den Widerständen R2 und R3 und dem Kondensator C2 gebildet. Infolge dieser RC-Glieder entsteht zwischen dem Sendetaktimpuls, der von der Steuereinheit PZ geliefert wird, und dem aufgrund dieses Taktimpulses ausgesendeten Signal eine Phasenverschiebung. Die wechselseitige Signalisierung, bei der die Informationen entweder blockweise von der zentralen Einrichtung zum jeweiligen Fernsprechapparat und anschließend in der dazu umgekehrten Richtung gesendet werden oder bei der eine bitweise Verschachtelung der wechselseitig den beiden Richtungen zuzuordnenden Informationsbits innerhalb eines Datenblocks vorgenommen wird, erfordert eine genaue zeitliche Abstimmung der jeweiligen Sendezeitpunkte in den genannten Einrichtungen. Es muß der Takt, der im Fernsprechapparat der Aussendung der Informationsbits zugrunde gelegt wird, mit dem Takt, der in der zentralen Einrichtung die Aussendung der Informationsbits bestimmt, übereinstimmen. Hierzu ist eine gegenseitige Synchronisation derjenigen Einheiten, von denen der Takt abgeleitet wird, erforderlich. Im Ausführungsbeispiel werden die für die Steuereinheit Pz der zentralen Einrichtung ZSt erforderlichen Taktfolgen von der Oszillatoranordnung Osz1 abgeleitet. Für die Steuereinheit Pt des Fernsprechapparates TS1 werden die notwendigen Taktfolgen unter Zwischenschaltung von nicht weiter dargestellten Teilerschaltungen von der Oszillatoranordnung Osz2 abgeleitet. Für die übrigen Fernsprechapparate TS gilt entsprechendes.

Man ist bestrebt, die einzelnen Einheiten von kleinen Nebenstellenanlagen kostengünstig aufzubauen. Es werden deshalb einfache Oszillatorschaltungen verwendet, an deren Frequenzkonstanz keine hohen Forderungen gestellt werden. Um die erforderliche Taktgenauigkeit einzuhalten, setzt dies jedoch voraus, daß sie auch innerhalb eines jeden übertragenen Datenblockes synchronisiert werden, wobei diese Synchronisierimpulse von den in einer vorgegebenen Richtung ausgesendeten Impulsen abzuleiten sind.

Für diese Synchronisierung kann nicht der Sendetakt und der aufgrund dieses Sendetaktes in den einzelnen Sprechapparaten empfangene Impuls herangezogen werden, da durch die zur Verformung der jeweiligen Sendeimpulse vorhandenen RC-Glieder die bereits erwähnte Phasenverschiebung entsteht. Um diese Phasenverschiebung zu eliminieren, wird an die Sendeleitung der zentralen Einrichtung dieselbe einfache Empfangsschaltung angekoppelt, wie sie auch in den einzelnen Fernsprechapparaten verwendet wird. Dadurch ist es möglich, in der zentralen Einrichtung die vorzunehmende Zeitsteuerung für das Eintreffen der Signalimpulse, die vom Fernsprechapparat ausgesendet werden, bei vernachlässigbar geringen Laufzeiten synchron mit der Zeitsteuerung im Fernsprechapparat vorzunehmen. Wegen der beiden identischen Empfangsschaltungen wird durch sie eine bestimmte Flanke des ausgesendeten Impulses, beispielsweise die fallende Impulsflanke, gleichzeitig erkannt. Dadurch kann die Synchronisation zwischen der Oszillatoranordnung in der zentralen Einrichtung und der Oszillatoranordnung in den einzelnen Fernsprechapparaten mit dem Erkennen dieser Impulsflanke, die dann jeweils einen Synchronisierimpuls zur Folge hat, neu hergestellt werden. Es kann also innerhalb eines jeden Datenblockes die Synchronisation öfter wiederholt werden, so daß billige Oszillatorschaltungen mit größerer Toleranz eingesetzt werden können.

Die zusätzlich an die Sendeleitung in der zentralen Einrichtung angeschaltete Empfangsschaltung Ez enthält in gleicher Weise wie die Empfangsschaltung Et, die in jedem Fernsprechapparat angeordnet ist, für die Spannungsauswertung eine Zenerdiode, nämlich die Zenerdiode ZD3. Durch den hochohmigen Widerstand R7 wird für diese Zenerdiode ein bestimmter Zenerstrom aufrechterhalten. Durch den Spannungsabfall der Zenerdiode wird der mit ihr emitterseitig und über den Basiswiderstand R8 gekoppelte Transistor T4 gesteuert. Dieser Transistor stimmt hinsichtlich seiner Funktion mit dem Transistor T6 in der Empfangsschaltung Et überein. Mit R9 ist der Kollektorwiderstand des Transistors T4 bezeichnet. Der an diesem Widerstand auftretende Spannungsabfall, der jeweils einen ausgesendeten Impuls definiert, steuert über den Widerstand R10 den Transistor T5. Der Widerstand R10 bildet in Verbindung mit dem Kondensator C4 ein Verzögerungsglied, das in der Empfangsschaltung Et in gleicher Weise vorhanden ist. Durch dieses Verzögerungsglied wird erreicht, daß sich Störspitzen nicht auswirken können. Der Transistor T5 dient lediglich als Pegelumsetzer. Der an seinem Kollektorwiderstand R11 auftretende Spannungsabfall wird über den Widerstand R12 der Steuereinheit Pz mitgeteilt. Durch diese Steuereinheit kann dann dadurch beispielsweise jede fallende Flanke eines ausgesendeten Impulses erkannt werden. Dieselbe Flanke wird bei Vernachlässigung von Laufzeiten gleichzeitig durch die Steuereinheit Pt aufgrund des ihr in gleicher Weise übermittelten Empfangsimpulses erkannt. Jede Steuereinheit leitet dann davon einen Synchronisierimpuls für die Oszillatorschaltung Osz1 bzw. Osz2 ab. In der Empfangseinheit Ez fehlen gegenüber der Empfangseinheit Et diejenigen Bauelemente, die dort zur gezielten Anpassung an die Leitungsbedingungen vorhanden sind. Bei der Empfangsschaltung Ez, die ja bezogen auf die Senderichtung am Leitungsanfang angeordnet ist, kann der Einfluß der Übertragungsleitung unberücksichtigt bleiben.

Das Impulsdiagramm in der Zeile a der Fig. 2 zeigt beispielhaft ein Bitmuster für einen von der zentralen Einrichtung auszusendenden Datenblock. Jedes dargestellte Bitmuster entspricht dem von der Steuereinheit Pz an die gemeinsame Sendeschaltung Sz angelegten Sendetakt. Der Datenblock, der ständig und nicht nur bei Informationsänderungen ausgesendet wird, kann mit einem Synchronisationsbit Sy beginnen, das zur Unterscheidung von den übrigen Informationsbits die doppelte zeitliche Länge aufweisen kann. Das nachfolgend gestrichelt eingezeichnete Informationsbit Se kann das beschriebene Selektionsbit sein, das durch jeweils eine der Selektionsschaltungen S1 bis Sx in den Datenblock zur Auswahl eines bestimmten Fernsprechapparates eingefügt ist. Im Beispiel fügt sich daran die Bitfolge »0, 1, 0, 1« an. Durch die Lage dieser Bits im Datenblock ist die Ansteueradresse für einzelne optische Anzeigeelemente festgelegt. Der Leuchtzustand dieser Anzeigeelemente wird durch diese Bitfolge bestimmt. Mit einem übertragenen 1-Bit soll beispielsweise die Information gekoppelt sein, daß das zugeordnete Anzeigeelement wirksam geschaltet ist. Stellt dieses eine Leuchtdiode dar, so befindet sich diese dadurch in ihrem Leuchtzustand. Dies wird durch entsprechende Ansteuersignale von der Steuereinheit des betreffenden Fernsprechapparates sichergestellt.

Es kann beispielsweise ein Quittungsbit Q und ein Paritätsbit P folgen. Zwischen den Informationsbits ist im Ausführungsbeispiel der Zeile a eine Pause von jeweils der gleichen Länge eingefügt. Während dieser Pausenzeit kann bei der bitweisen Verschachtelung jeweils ein vom Fernsprecher ausgesendetes Informationsbit als 0- oder 1-Bit eingefügt sein.

In der Zeile b ist der Spannungsverlauf auf der Signalleitung dargestellt, der sich aufgrund des durch die Steuereinheit gemäß Zeile a vorgegebenen Sendetaktes ergibt. Jeder Taktimpuls führt, wie bereits geschildert, zu einer Absenkung der Signalspannung. Durch diese Absenkung vom Signalspannungsruhewert Ur auf den Wert Us ist somit jedes 1-Bit definiert. Zwischen jedem Sendetaktimpuls und dem tatsächlich ausgesendeten Impuls besteht eine Phasenverschiebung tv. Diese Phasenverschiebung ergibt sich durch RC-Glieder, die im Sendekreis eingeschaltet sind, um sendeseitig die ausgesendeten Impulse bereits zu verformen. Dadurch wird die notwendige Verminderung der Geräuschspannung auch in den Fällen erreicht, in denen ein Sprechapparat über eine sehr kurze Anschlußleitung mit der zentralen Einrichtung verbunden ist. Sowohl in der sendeseitigen Empfangsschaltung Ez und in der Empfangsschaltung Et wird der ausgesendete Impuls während seiner Impulszeit tz aufgenommen und der jeweiligen Steuereinheit Pz bzw. Pt zugeführt. Jede abfallende Flanke kann zur Synchronisation der vorhandenen Oszillatorschaltungen dienen. Dies ist jeweils durch den Index SI in der Zeile b angedeutet. Während der Zeit Ts kann nun zeitgerecht vom jeweiligen Fernsprechapparat aus ein Informationsbit zu der zentralen Einrichtung gesendet werden.

## Patentansprüche

1. Schaltungsanordnung für kleine Fernsprechnebenstellenanlagen mit wechselseitiger Übertragung von binären Digitalsignalen zwischen einer zentralen Einrichtung (ZSt) und Fernsprechapparaten (TS1 ... TSx), die mit ihr über kurze, aus einer zweiadrigen Signalleitung (c, d) und einer zweiadrigen Sprechleitung (a, b) bestehenden Verbindungsleitung sternförmig verbunden sind, wobei vorzugsweise die Informationen der einen Richtung bitweise mit denen der anderen Richtung innerhalb festgelegter Datenblöcke verschachtelt sind und die Übertragung durch Binärzeichen mit durch ihre Amplitude oder ihr Vorzeichen unterschiedenen und in der einen, vorzugsweise von der zentralen Einrichtung zu den Fernsprechapparaten weisenden Richtung auf die Signalleitungsspannen und in der dazu entgegengesetzten Richtung auf die Signalleitungsströme bezogenen Binärwerten erfolgt und der Übertragung von der zentralen Einrichtung zu den Fernsprechapparaten eine wesentlich höhere Informationsdichte als in der Gegenrichtung zugrunde liegt, dadurch gekennzeichnet, daß durch die Sendeeinheit (Sz) eine Verformung der durch eine Amplitudenänderung erzeugten und einem bestimmten Binärwert zugeordneten Impulse vermittels blindwiderstandbehafteter Elemente (R1 bis R3, C1, C2) bewirkt wird, daß am Ausgang der an die Signalleitung (c-Ader) angeschalteten Sendeeinheit (Sz) eine Empfangsschaltung (Ez) angeordnet ist, die im grundsätzlichen Aufbau derjenigen Empfangsschaltung (Et) entspricht, die am anderen Ende der Signalleitung für die Registrierung eben dieser Impulse vorhanden ist, daß eine vorbestimmte Flanke (abfallende Flanke) eines jeden, in den genannten Empfangsschaltungen (Ez, Et) registrierten Impulses zur Synchronisation der jeweils für die Takterzeugung maßgebenden Einheit (Osz1, Osz2) verwendet wird.

2. Schaltungsanordnung nach Anspruch 1, dadurch gekennzeichnet, daß die genannte Verformung für diejenigen Impulse mit Ausnahme des Selektionsimpulses vorgenommen wird, die durch die Amplitudenänderung der Signalspannung erzeugt werden und der Informationsübermittlung von der zentralen Einrichtung (ZSt) zu den jeweiligen Sprechapparaten (TS1 ... TSx) dienen.

## Claims

1. Circuit arrangement for small PBX telephone exchanges, with tow-way transmission of binary digital signals between a central device (ZSt) and telephone devices (TS1 ... TSx) which are connected thereto in a star formation via short connection lines which comprise a two-wire signalling line (c, d) and a two-wire speech line (a, b), wherein preferably the information items of the one direction are interlocked bitwise with those of the other direction within predetermined data blocks, and the transmission is effected by means of binary signals which have binary values which differ in respect of their amplitude or their sign and which, in the one direction — which preferably leads from the central device to the telephone devices — relate to the signal line voltages and relate to the signal line currents in the opposite, direction, and the transmission from the central device to the telephone devices is based on a considerably higher information density than in the opposite direction, characterised in that with the assistance of elements (R1 to R5, C1, C2) which are acted upon by reactive impedances the transmitting unit (Sz) effects a deformation of the pulses which have been produced by amplitude modification and have been assigned to a specific binary value, that at the output of the transmitting unit (Sz) connected to the signalling line (c-wire) there is arranged a receiving circuit (Ez) which basically corresponds to the construction of the receiving circuit (Et) which is arranged at the other end of the signalling line for the recording of these very pulses, that a predetermined flank (falling flank) of each pulse recorded in the aforementioned receiving circuits (Ez, Et) is used to synchronise the unit (Osz1, Osz2) which governs the clock pulse generation.

2. Circuit arrangement as claimed in claim 1, characterised in that the aforementioned deformation is carried out in respect of those pulses — with the exception of the selection pulse — which are produced as a result of a change in the amplitude of the signal voltage and serve to transmit information from the central device (ZSt) to the relevant speech devices (TS1 ... TSx).

## Revendications

1. Montage pour petits centraux téléphoniques privés à transmission bidirectionnelle de signaux numériques binaires entre un dispositif central (ZSt) et des appareils téléphoniques (TS1 ... TSx) qui leur sont reliés suivant une représentation en étoile, à l'aide d'une ligne de liaison qui est constituée par une ligne de signalisation bifilaire (c, d) et une ligne du bifilaire (a, b) de conversation, les informations, de préférence de l'une des directions, étant imbriquées, avec celles de l'autre direction, dans des blocs de données déterminées, et la transmission par des signes binaires ayant lieu avec des valeurs binaires différentes du point de vue de l'amplitude ou du signe, et rapportées, dans l'une des directions, de préférence dans la direction menant du dispositif central aux appareils téléphoniques, aux tensions de la ligne de signalisation, et, dans la direction opposée à la précédente, aux courants de la ligne de signalisation, alors que la transmission du dispositif central vers les appareils téléphoniques est basée sur une densité d'informations notablement plus grande que dans la direction opposée, caractérisé par le fait que par l'unité d'émission (Sz) est introduite, à l'aide d'éléments à réactance (R1 à R3, C1, C2), une déformation des impulsions produite par une modification de l'amplitude et associées à une valeur binaire déterminée, qu'à la sortie de l'unité d'émission (Sz) branchée à la ligne de signalisation (fil de test), est disposé un circuit de réception (Ez) qui, du point de vue de sa constitution de principe, correspond à celle du circuit de réception (Et) qui est prévue à l'autre extrémité de la ligne de signalisation pour précisément ces impulsions, qu'un flanc prédéterminé (flanc décroissant) de chacune des impulsions enregistrées dans lesdits circuits de réception (Ez, Et), est utilisé pour la synchronisation de l'unité (Osz1, Osz2) déterminante pour la production de la cadence.

2. Montage selon la revendication 1, caractérisé par le fait que ladite déformation est opérée, à l'exception des impulsions de sélection, pour les impulsions qui sont produites par une modification d'amplitude de la tension de signal et qui servent à la transmission d'informations du dispositif central (ZSt) aux appareils téléphoniques concernés (TS1 ... TSx).

FIG 1

# FIG 2

a)

Sy   Se   0   1   0   1   Q   P

b)

$U_r$
$U_s$

tv — tz — ts

SJ    SI    SI    SI    SI

0 048 925